# EUROPÄISCHE PATENTANMELDUNG

(11) **EP 2 058 596 A1**
(43) Veröffentlichungstag der Anmeldung: **13.05.2009**
(21) Anmeldenummer: 08450161.8
(22) Anmeldetag: 21.10.2008
(51) Int. Cl.: F24D 13/02, F28F 21/04

(54) **Wärmestrahler für eine Wärmekabine**

(30) Priorität: 06.11.2007 AT 6652007 U
(71) Anmelder: Gattinger, Christian, 4694 Ohlsdorf (AT)
(72) Erfinder: Gattinger, Christian, 4694 Ohlsdorf (AT)
(74) Vertreter: Hübscher, Helmut

(57) **Zusammenfassung**

Es wird ein Wärmestrahler für eine Wärmekabine mit einem einer Heizung (3) vorgelagerten, plattenförmigen Wärmeübertragungskörper beschrieben, der auf der der Heizung (3) abgekehrten Seite eine Wärmeabstrahlfläche (6) bildet. Um vorteilhafte Erwärmungsbedingungen zu schaffen, wird vorgeschlagen, dass der Wärmeübertragungskörper aus einer mit natürlichen Fasern vermischten Lehmschicht (2) besteht.

## Beschreibung

Die Erfindung bezieht sich auf einen Wärmestrahler für eine Wärmekabine mit einem einer Heizung vorgelagerten, plattenförmigen Wärmeübertragungskörper, der auf der der Heizung abgekehrten Seite eine Wärmeabstrahlfläche bildet.

Übliche Wärmestrahler dieser Art weisen beispielsweise an einer Wand einer Wärmekabinen befestigbare Gehäuse mit von der Rückseite her beheizbaren Wärmeübertragungskörpern in Form von Blechplatten auf, die über ihre pulverbeschichteten oder lackierten Oberflächen Wärme in den Kabinenraum abstrahlen. Mit Hilfe dieser bekannten Wärmestrahler kann zwar der Kabinenraum in einfacher Art mit Wärmeenergie in einem für die Wärmebehandlung von Benützern solcher Wärmekabinen vorteilhaften Wellenlängenbereich versorgt werden, doch sind zum Einstellen eines das Wohlbefinden dieser Benützer unterstützenden Raumklimas zusätzliche Maßnahmen erforderlich, die insbesondere auf die jeweilige Luftfeuchtigkeit Einfluss nehmen.

Der Erfindung liegt somit die Aufgabe zugrunde, einen Wärmestrahler der eingangs geschilderten Art für eine Wärmekabine so auszubilden, dass auf zusätzliche Maßnahmen zur Beeinflussung des Raumklimas im Hinblick auf das Wohlbefinden der Benützer solcher Wärmekabinen weitgehend verzichtet werden kann.

Die Erfindung löst die gestellte Aufgabe dadurch, dass der Wärmeübertragungskörper aus einer mit vorzugsweise natürlichen Fasern vermischten Lehmschicht besteht.

Die Erfindung geht von der Erkenntnis aus, dass es zur Bereitstellung eines für das Wohlbefinden eines Benützers einer Wärmekabine vorteilhaften Raumklimas nicht einer Kabinenkonstruktion aus Lehmwänden bedarf, wie dies bei Saunakabinen bekannt ist, sondern dass es im Allgemeinen ausreicht, lediglich die Wärmestrahler mit Wärmeübertragungskörpern aus Lehm auszurüsten, um ein Raumklima zu schaffen, das mit dem einer Lehmsauna vergleichbar ist. Dies gilt insbesondere für die Fähigkeit der Wärmespeicherung und die Beeinflussung der Luftfeuchtigkeit, weil die vom Lehm außerhalb der Heizperioden aus der Raumluft aufgenommene Feuchtigkeit während der Heizperioden wieder an die Raumluft abgegeben wird. Die vorteilhafte Nutzung dieser Eigenschaften setzt eine ausreichende Dicke der Lehmschicht voraus. Damit durch eine vergleichsweise dickere Lehmschicht die beim Einsatz als Wärmeübertragungskörper anfallende Wärmebelastung ohne Gefahr einer Rissbildung aufgenommen wird, wird der Lehmwerkstoff mit natürlichen Fasern, beispielsweise aus Hanf oder Stroh, gemischt und dadurch eine ausreichende Bewehrung der Lehmsicht erhalten.

Als Heizung können unterschiedliche Einrichtungen eingesetzt werden, beispielsweise Strömungsrohre für einen Wärmeträger. Besonders günstige Heizbedingungen ergeben sich allerdings im Hinblick auf die Flächenbelastung des Wärmeübertragungskörpers, wenn die Heizung als elektrische Heizfolie ausgebildet ist.

Um vorteilhafte Konstruktionsbedingungen sicherstellen zu können, kann zwischen der als Heizfolie ausgebildeten Heizung und der Lehmschicht eine Trägerschicht vorgesehen sein, die nicht nur Tragfunktionen übernimmt, sondern auch als Haftvermittler zwischen der Heizfolie und der Lehmschicht dient. Aus diesem Grunde empfiehlt es sich, die Trägerschicht aus einer Gittermatte herzustellen, obwohl dies nicht zwingend ist. Als Trägerschicht könnte auch ein Vlies oder ein Blech eingesetzt werden.

Insbesondere bei der Verwendung einer Trägerschicht wird durch die Lehmschicht und die Heizung eine selbsttragende Konstruktionseinheit geschaffen, sodass die Lehmschicht mit der Heizung in einem Rahmen eingesetzt werden kann, mit dessen Hilfe der Wärmestrahler in einfacher Weise an der Wand einer Wärmekabine befestigt werden kann.

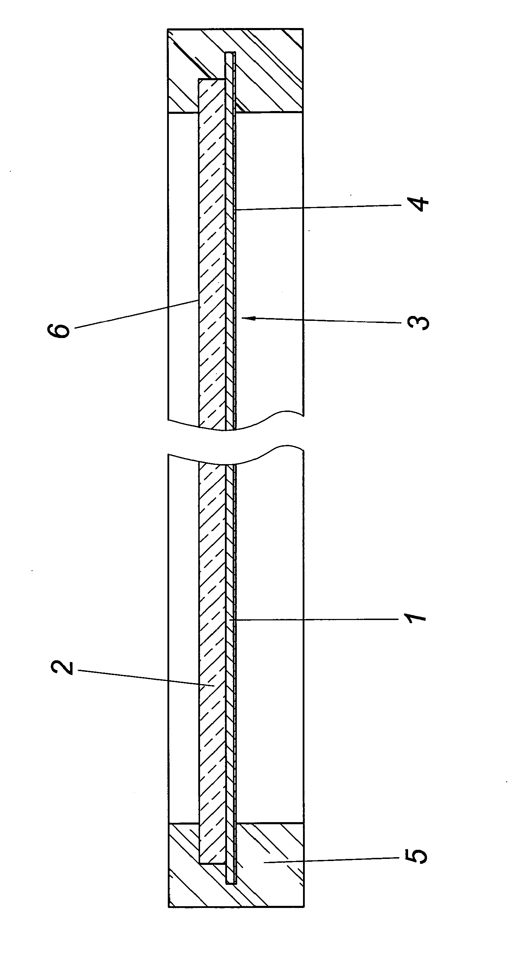

In der Zeichnung ist der Erfindungsgegenstand beispielsweise dargestellt, und zwar wird ein erfindungsgemäßer Wärmestrahler für eine Wärmekabine in einem vereinfachten Querschnitt gezeigt.

Der Wärmestrahler weist eine Trägerschicht 1 aus einem Blech oder einer Gittermatte auf, die auf einer Seite mit einer Lehmschicht 2 versehen ist. Diese Lehmschicht ist mit natürlichen Fasern, beispielsweise aus Hanf oder Stroh, vermischt, um die Rissanfälligkeit zu verringern. Auf der der Lehmsicht 2 gegenüberliegenden Seite der Trägerschicht 1 ist eine Heizung 3 in Form einer elektrischen Heizfolie 4 vorgesehen. Die durch die Trägerschicht 1 die Lehmschicht 2 und die Heizfolie 4 gebildete, selbsttragende Konstruktionseinheit ist in einem viereckigen Rahmen 5 eingesetzt, der vorzugsweise aus einem Holzwerkstoff gefertigt ist.

Mit der Beaufschlagung der Heizung 3 wird über die Trägerschicht 1 die Lehmschicht 2 erwärmt, deren der Trägerschicht 1 abgekehrte Oberfläche eine Wärmeabstrahlfläche 6 bildet. Durch den Lehmwerkstoff des Wärmeübertragungskörpers wird in vorteilhafter Weise Einfluss auf die Luftfeuchtigkeit in der Wärmekabine genommen. Außerdem können nicht nur die sich bei Lehmwänden bemerkbar machenden Eigenschaften des Lehmwerkstoffes hinsichtlich des Raumklimas, sondern auch die Wärmespeicherfähigkeit des Lehmwerkstoffes bei Wärmekabinen genützt werden. Die Erfindung ist selbstverständlich nicht auf das dargestellte Ausführungsbeispiel beschränkt. So könnte anstelle des Rahmens 5 auch ein nur im Bereich der Wärmeabstrahlfläche 6 offenes Gehäuse für den Wärmestrahler vorgesehen werden.

## Patentansprüche

1. Wärmestrahler für eine Wärmekabine mit einem einer Heizung (3) vorgelagerten, plattenförmigen Wärmeübertragungskörper, der auf der der Heizung (3) abgekehrten Seite eine Wärmeabstrahlfläche (6) bildet, **dadurch gekennzeichnet, dass** der Wärmeübertragungskörper aus einer mit natürlichen Fasern vermischten Lehmschicht (2) besteht.

2. Wärmestrahler nach Anspruch 1, **dadurch gekennzeichnet, dass** zwischen der als Heizfolie (4) ausgebildeten Heizung (3) und der Lehmschicht (2) eine Trägerschicht (1) vorgesehen ist.

3. Wärmestrahler nach Anspruch 2, **dadurch gekennzeichnet, dass** die Trägerschicht (1) aus einer Gittermatte besteht.

4. Wärmestrahler nach einem der Ansprüche 1 bis 3, **dadurch gekennzeichnet, dass** die Lehmschicht (2) mit der Heizung (3) in einem Rahmen (5) eingesetzt ist.
